# EUROPÄISCHE PATENTSCHRIFT

(11) **EP 3 133 302 B1**
(45) Veröffentlichungstag und Bekanntmachung des Hinweises auf die Patenterteilung: **17.10.2018**
(21) Anmeldenummer: 16178967.2
(22) Anmeldetag: 12.07.2016
(51) Int. Cl.: F16B 19/08, B21J 15/02, B21J 15/12

(54) **STANZNIET**
PUNCH RIVET
POINÇONNAGE PAR RIVETS

(30) Priorität: 10.08.2015 DE 102015215197
(43) Veröffentlichungstag der Anmeldung: 22.02.2017
(73) Patentinhaber: ROBERT BOSCH GMBH, 70442 Stuttgart (DE)
(72) Erfinder: Woelke, Florian, 71229 Leonberg (DE); Luz, Pascal, 01069 Dresden (DE)
(74) Vertreter: Thürer, Andreas

(56) Entgegenhaltungen:
- EP-A1- 2 846 050
- EP-B1- 2 318 161
- WO-A1-01/30516
- WO-A1-2015/107350
- DE-A1-102011 056 765
- DE-B3-102006 028 537
- DE-B3-102007 007 496
- DE-U1- 29 509 439

## Beschreibung

Die vorliegende Erfindung betrifft eine Verwendung eines Stanzniets bei einem schwingungsunterstützten Stanznietverfahren.

### Stand der Technik

Verfahren zum Stanznieten dienen zum Verbinden mindestens zweier in einem Verbindungsbereich insbesondere eben ausgebildeter Bauteile (Fügepartner). Ein Stanznietverfahren zeichnet sich dadurch aus, dass ein Vorlochen der miteinander zu verbindenden Bauteile nicht erforderlich ist. Vielmehr wird ein Stanzniet mittels eines Stempels oder eines Stempelwerkzeugs in die wenigstens zwei Bauteile eingedrückt, wobei durch einen entsprechend geformten Gegenhalter, bspw. in Form einer Matrize, der mit dem Stempelwerkzeug zusammenwirkt, sichergestellt ist, dass der Niet oder die Bauteile sich in einer bestimmten Art und Weise verformen, um eine kraft- und formschlüssige Verbindung zwischen den Bauteilen herzustellen.

Weiterhin sind bspw. aus der EP 2 318 161 B1 oder der DE 10 2014 203 757 A1 sog. Ultraschall-Stanznietverfahren bekannt, bei denen ein Schwingungserzeuger, wie bspw. ein Ultraschall-Generator verwendet wird, um ein oder mehrere Komponenten beim Verbinden der Bauteile in Schwingung zu versetzen. Durch diese Schwingung wird bspw. die aufzuwendende Kraft zum Eindrücken des Niets reduziert. Jedoch hat sich gezeigt, dass herkömmliche Nietgeometrien nicht optimal für schwingungsunterstützte Stanznietverfahren ausgelegt sind.

Aus der DE 295 09 439 U1, der DE 10 2006 028 537 B3, der EP 2 318 164 B1 sowie der WO 2015/107350 A1 sind verschiedene Stanzniete mit Vorsprüngen vom Nietschaft oder vom Nietfuß bekannt.

### Offenbarung der Erfindung

Erfindungsgemäß wird die Verwendung eines Stanzniets bei einem schwingungsunterstützten Stanznietverfahren mit den Merkmalen des Patentanspruchs 1 vorgeschlagen. Vorteilhafte Ausgestaltungen sind Gegenstand der Unteransprüche sowie der nachfolgenden Beschreibung.

Gemäß einem Aspekt der Erfindung wird vorgeschlagen, einen Stanzniet an seinem Schaft mit wenigstens einem oder zweckmäßigerweise mehreren, z.B. wenigstens drei, Vorsprüngen auszustatten, die als Energierichtungsgeber wirken und in den Niet eingekoppelte Schwingungsenergie effizienter und gezielter auf die Fügepartner übertragen.

Durch diese Maßnahme wird der Wirkungsgrad der Technologie erhöht - d.h. für dasselbe Ergebnis wird weniger elektrische Generatorleistung benötigt. Weiterhin können durch den konzentrierten Energieeintrag die positiven, schwingungsbedingten Effekte (Kraftreduktion beim Fügen, verbesserte, rissfreie Materialdeformation, bessere Materialtrennung, bessere Schnittprozesse) noch weiter verstärkt werden. Zusätzlich kann ein reproduzierbarer Prozessablauf mit geringerer Streubandbreite im Kraftsignal realisiert werden, da durch die Energierichtungsgeber bzw. veränderte Kopfgeometrie weniger Verlustleistung in die Vorrichtung bzw. zur Messtechnik gelangt.

Die Erfindung bedient sich Stanznietvorrichtungen mit Vibrationseinrichtung, nämlich einem Ultraschallsystem, um dort den Fügeprozess zu verbessern. Solche Stanznietvorrichtungen haben besondere Vorteile im automobilen Karosserieleichtbau, da das Vibrations- bzw. Ultraschallstanznieten mit der entsprechend ausgelegten Anlagentechnik viele Fügeaufgaben im Bereich Materialmischbau erleichtert und neue Materialdickenkombinationen ermöglicht. Jedoch kann eine Stanznietvorrichtung mit Vibrationsunterstützung auch in anderen Bereichen und/oder zum Fügen anderer Materialein vorteilhaft verwendet werden. Mittels Vibrationen beim Stanznieten werden die für den Nietprozess erforderlichen, i.d.R. sehr hohen, Prozesskräfte erheblich reduziert. Daraus resultieren Anlagen- (z.B. leichtere Anlage, bessere Zugänglichkeit), Prozess- (z. B. Verbesserung Schnittprozess, Reduktion von Delaminationen beim Stanznieten von Faserverbundwerkstoffen, Erweiterung des nietbaren Materialspektrums) und Kostenvorteile (z.B. geringere Verbrauchskosten für OEM).
Der Nietschaft ist erfindungsgemäß an seinem Fuß mit dem wenigstens einen Vorsprung ausgestattet und kann an seiner Mantelfläche mit wenigstens einem weiteren Vorsprung ausgestattet sein. Damit kann die Richtung der Energieübertragung besonders einfach beeinflusst werden. Dadurch dass der Nietschaft an seinem Fuß, d.h. an dem dem Nietkopf gegenüberliegenden Ende, mit dem wenigstens einen Vorsprung ausgestattet ist, stellt dieser Vorsprung als Nietschneide den ersten Kontakt mit dem Werkstück in Fügerichtung her. Die Energieübertragung parallel zur Fügerichtung wird verstärkt. Der Schneidvorgang wird verbessert. Ist der Nietschaft zusätzlich an seiner Mantelfläche mit dem wenigstens einen Vorsprung ausgestattet, führt dies zu einer Verstärkung der Energieübertragung senkrecht zur Fügerichtung. Dies führt zu einem stabilen Einpressprozess, bei dem ein Aufschaukeln des Stanzniets verringert oder ganz vermieden ist.
Erfindungsgemäß springt der wenigstens eine Vorsprung vom Nietfuß nach unten in axialer Richtung entlang einer Längsachse des Niets vor und erstreckt sich in Umfangsrichtung des Stanzniets. Mit anderen Worten ist der Nietfuß an seinem Umfang wenigstens einmal, vorzugsweise jedoch mehrmals unterbrochen. Zwischen zwei Vorsprüngen befindet sich eine Aussparung. Vorzugsweise weist der Nietfuß zwei bis 12, mehr vorzugsweise zwei bis sechs Vorsprünge auf, die vorzugsweise regelmäßig über den Umfang des Nietfußes verteilt sind. Mit anderen Worten ist der Nietfuß kronenartig (Zacken symmetrisch entlang des Umfangs) bzw. lochsägenartig (Zacken asymmetrisch entlang des Umfangs) mit einer Anzahl von Zacken ausgestaltet.

Gemäß einer ebenso bevorzugten Ausführungsform springt wenigstens ein zusätzlicher Vorsprung vom Nietfuß seitlich in radialer Richtung senkrecht zu einer Längsachse des Niets vor und erstreckt sich in Längsrichtung des Niets. Mit anderen Worten weist der Nietschaft an seiner Mantelfläche wenigstens eine, vorzugsweise jedoch mehrere Rippen auf. Dabei können sich die Rippen über die gesamte Nietschaftlänge erstrecken oder nur an partiellen Bereichen befinden
Vorzugsweise weist der wenigstens eine Vorsprung zwei sich in einem Winkel zueinander erstreckende Flächen auf. Der Winkel beträgt mindestens 25°, 35°, 45°, 55°, 65°, 75° oder 85°. Er beträgt vorzugsweise höchstens 105°. Er beträgt vorzugsweise 90°. Mit anderen Worten verjüngt sich der Vorsprung im Querschnitt. Dort wo die Flächen aufeinandertreffen bzw. ineinander übergehen, kann eine Berührlinie, d.h. eine Winkelspitze, gebildet sein. Der Berührbereich kann auch abgerundet sein. Springt der wenigstens eine Vorsprung vom Niefuß vor, weist vorzugsweise auch die wenigstens eine zugehörige Aussparung zwei solche soeben beschriebene Flächen auf. Sobald also die Aussparungen beim Stanznieten den oberen Fügepartner berühren, wird auch hier die Kraft- und Schalleinleitung verbessert.

Wird zusätzlich der Nietkopf mit einer gegenüber einer Querschnittsfläche des Nietschafts verkleinerten ebenen Wechselwirkungsfläche für einen Stempel ausgerüstet, kann die Schwingungsenergie effizienter in den Niet eingekoppelt und gezielter auf die Fügepartner übertragen werden. Vorzugsweise beträgt die ebene Wechselwirkungsfläche höchstens 50% der Querschnittsfläche, mehr vorzugsweise höchstens 40% und/oder wenigstens 5%. Der Nietkopf kann z.B. ein abgeflachter Rundkopfniet sein, was insbesondere für Kunststoffanwendung vorteilhaft ist. Der Nietkopf kann alternativ z.B. ringförmig ausgebildet sein, d.h. der Niet weist eine durchgängige Bohrung auf (Hohlniet).

Für die Herstellung der Stanznieten sind Umformwerkzeuge bestehend aus Stempel und Matrize vorgesehen. Dabei werden in der Matrize die entsprechenden Konturen für das Ausformen des wenigstens einen Vorsprungs bzw. der Wechselwirkungsfläche berücksichtigt. Der Umformprozess des Nietwerkstoffes (Ausgangsform Zylinder) entspricht einem Napfrückwertsfließpressen in mehreren Hüben, vorzugsweise bei Raumtemperatur (Kaltschlagprozess). Der wenigstens eine Vorsprung an der Mantelfläche kann direkt beim Kaltschlagen des Stanznietes (in Richtung der Niet-Längsachse bzw. Symmetrieachse) in der Matrize mit abgeformt werden oder alternativ nachträglich durch radiales Kaltschlagen (senkrecht zur Niet- Längsachse bzw. Symmetrieachse) angebracht werden (z.B. entsteht durch Einprägen einer Nut neben der Nut (durch Volumenkonstanz) eine Überhöhung, welche mit der entsprechenden Werkzeugkontur gleichzeitig als radialer Vorsprung ausgeformt werden kann). Der Werksstoff der Halbhohlstanzniete ist vorzugsweise Vergütungsstahl, beispielsweise Edelstahl in V2A oder V4A Qualität, alternativ können aber auch alle gängigen Vergütungsstahl-Nietwerkstoffe wie z.B. 38B2 oder 34Cr4 verwendet werden.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung ausführlich beschrieben. Figurenbeschreibung
- Figuren 1a bis 1d: zeigen schematisch eine Stanznietvorrichtung bei verschiedenen Phasen eines Stanznietvorgangs.
- Figur 2: zeigt einen Stanzniet gemäß einer ersten bevorzugten Ausführungsform für eine Verwendung gemäß der Erfindung in einer perspektivischen Ansicht.
- Figur 3: zeigt einen Stanzniet gemäß einer nicht erfindungsgemäßen Ausführungsform in einer perspektivischen Ansicht.
- Figur 4: zeigt einen Stanzniet gemäß einer nicht erfindungsgemäßen Ausführungsform in einer perspektivischen und einer Schnittansicht.
- Figur 5: zeigt einen Stanzniet gemäß einer nicht erfindungsgemäßen Ausführungsform in einer perspektivischen und einer Schnittansicht.

### Detaillierte Beschreibung der Zeichnung

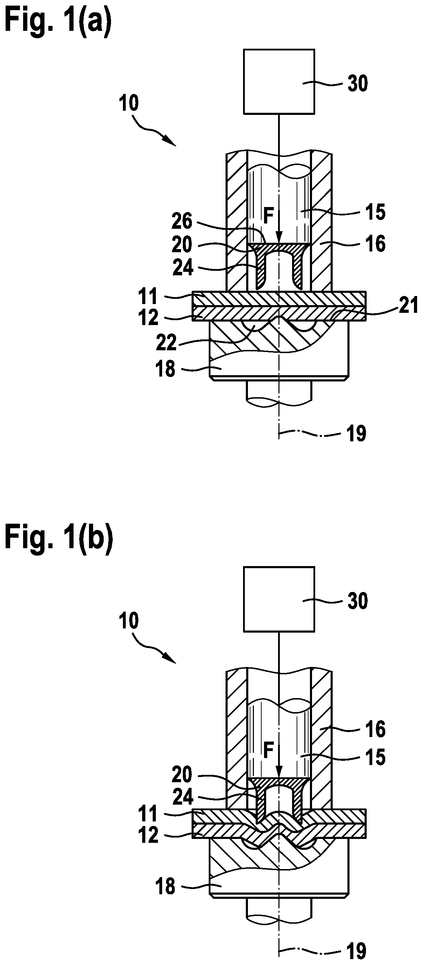

In den Figuren 1a bis 1d ist eine Stanznietvorrichtung 10 bei verschiedenen Phasen der Durchführung eines Stanznietverfahrens dargestellt. Die Stanznietvorrichtung 10 weist einen Stempel 15 auf, der beispielhaft einen runden Querschnitt aufweist.

Der Stempel 15 ist von einem hülsenförmigen Niederhalter 16 radial umgeben und relativ zu diesem in Längsrichtung beweglich angeordnet. Insbesondere ist der Stempel 15 mit einem hier nicht dargestellten Antrieb, bspw. einem hydraulischen oder pneumatischen Antrieb, gekoppelt, der dazu dient, eine zum Eindrücken eines Niets 20 in die beiden Bauteile 11, 12 benötigte Kraft F aufzubringen.

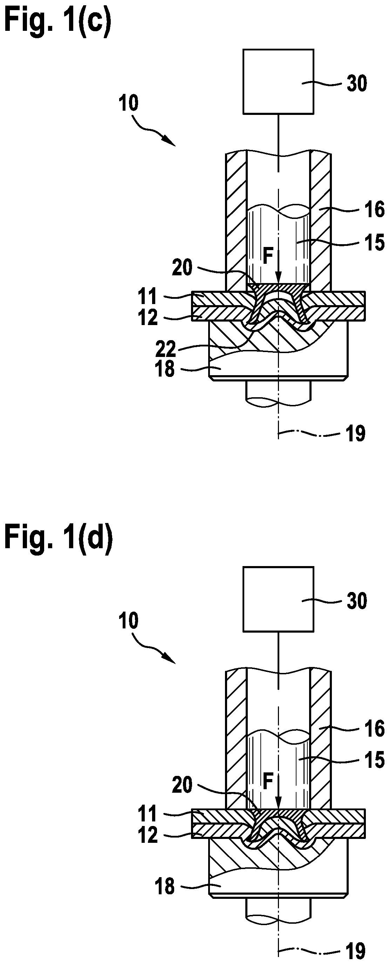

In einer in Figur 1b gezeigten weiteren Phase, d.h. während des weiteren Verlaufs des Nietvorgangs und unter Unterstützung der in die Bauteile 11, 12 eingekoppelten Schwingungen schneidet bzw. stanzt der Nietschaft 24 sich zunächst in das Bauteil 11 ein. Dabei werden die beiden Bauteile 11, 12 plastisch verformt, wobei das der Ausnehmung 22 zugewandte Bauteil 12 in den entsprechenden Bereichen in die Ausnehmung 22 eingedrückt wird. Während des weiteren Bewegungswegs bzw. der weiteren Abwärtsbewegung des Niets 20 entsprechend der Figur 1c wird der Nietschaft 24 im Bereich der Ausnehmung 22 nach außen gespreizt, wodurch die beiden Bauteile 11, 12 in Axialrichtung sicher form- und kraftschlüssig miteinander verbunden werden.
Dabei ist zu erkennen, dass entsprechend der Figur 1d, die die Endposition des Niets 20 zeigt, der Nietschaft 24 nicht aus dem Bauteil 12 herausragt bzw. dieses nicht vollständig durchdringt.
Nachdem der Niet 20 die in der Figur 1d dargestellte Endposition erreicht hat, bei der die Oberseite 26 des Niets 20 zumindest in etwa bündig mit der Oberseite des Bauteils 11 abschließt, wird anschließend der Stempel 15 wieder von den Bauteilen 11, 12 in entgegengesetzter Richtung nach oben bewegt.

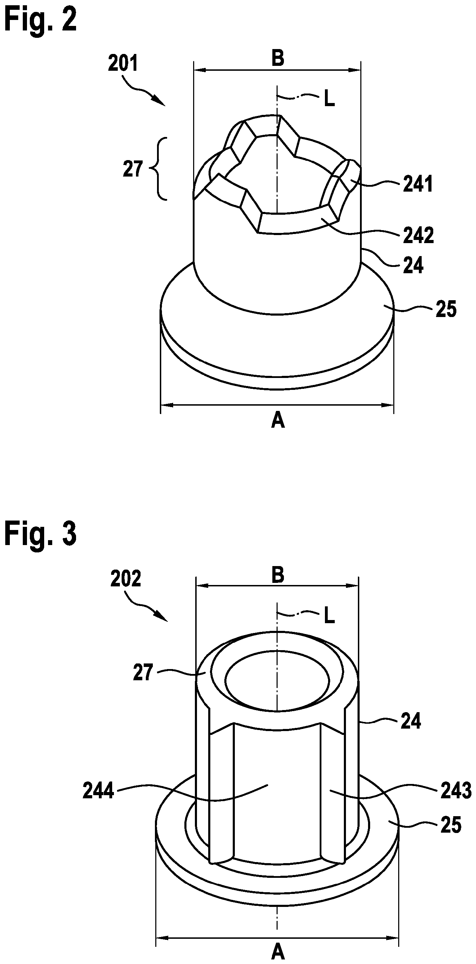

In Figur 2 ist ein Stanzniet 201 gemäß einer ersten bevorzugten Ausführungsform für eine Verwendung gemäß der Erfindung in einer perspektivischen Ansicht dargestellt. Der Stanzniet 201 ist als Halbhohlniet ausgebildet und weist einen Nietkopf 25 und einen sich daran anschließenden Nietschaft 24 auf. Der Nietschaft 24 wird an einem dem Nietkopf 25 gegenüberliegenden Ende von einem Nietfuß 27 begrenzt. Der Nietfuß 27 stellt den ersten Kontakt zum oberen Bauteil bzw. Fügepartner her und ist deshalb üblicherweise als Schneide ausgebildet. Der Nietschaft 24 hat eine Querschnittsfläche B. Dies gilt für alle in den Figuren 2 bis 5 dargestellten Stanzniete 201, 202, 203 bzw. 204.
Der Stanzniet 201 weist an seinem Nietfuß 27 drei (hier entlang der Umfangsrichtung symmetrische) Vorsprünge 241 und drei dazwischen liegende Aussparungen 242 auf. Sowohl jeder der Vorsprünge 241 als auch jede der Aussparungen 242 ist als Schneide ausgebildet und weist zwei sich in einem Winkel von hier 90° zueinander erstreckende Flächen auf, die jeweils eine Berührlinie definieren. Die drei Vorsprünge 241 springen von dem Nietfuß 27 in axialer Richtung entlang einer Längsachse und Symmetrieachse L des Stanzniets vor und erstrecken sich in Umfangsrichtung des Stanzniets 201. Insgesamt weist der Nietfuß 27 die Form einer Krone mit drei Zacken auf.

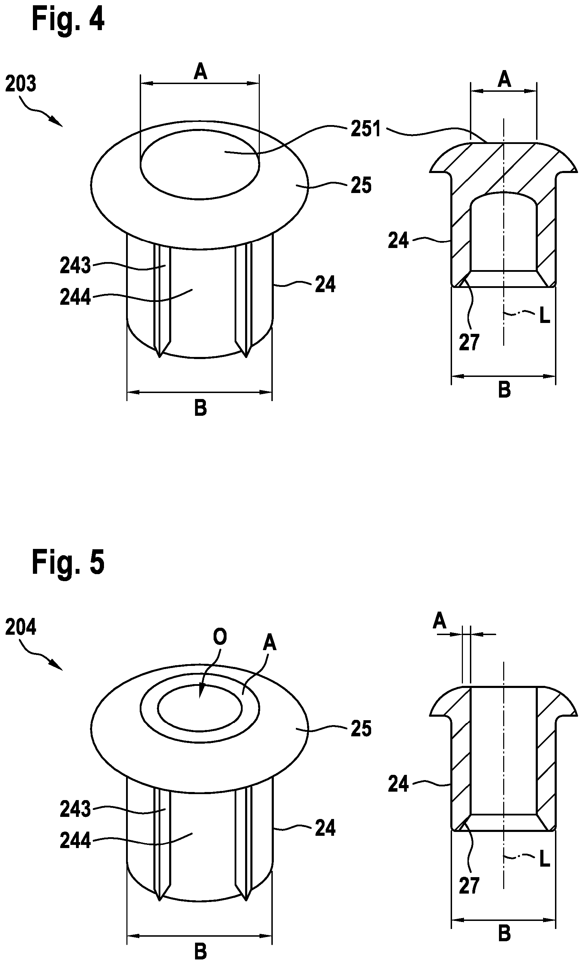

Der Nietkopf 25 weist eine ebene Wechselwirkungsfläche A zur Wechselwirkung mit einem Stempel einer Stanznietvorrichtung auf. Bei der in den Figuren 2 und 3 dargestellten herkömmlichen Variante ist die Wechselwirkungsfläche A mindestens so groß wie die Querschnittsfläche B, hier sogar größer. Bei den in den Figuren 4 und 5 dargestellten Varianten gemäß einer bevorzugten Ausführungsform der Erfindung ist die Wechselwirkungsfläche A kleiner als die Querschnittsfläche B. In Figur 4 beträgt das Verhältnis A/B = 0,25, in Figur 5 ist es kleiner 0,1.

Der Stanzniet 202 gemäß Figur 3 weist an seiner Mantelfläche 244 vier Vorsprünge 243 auf. Jeder der Vorsprünge 243 ist als Schneide ausgebildet und weist zwei sich in einem Winkel von hier 90° zueinander erstreckende Flächen auf, die jeweils eine Berührlinie definieren. Die vier Vorsprünge 243 springen von der Mantelfläche 244 in radialer Richtung senkrecht zu der Längsachse L des Stanzniets 202 vor und erstrecken sich in Längsrichtung L des Stanzniets 202. Es handelt sich daher um eine Art Rippen. Neben der Energieleitung können diese auch zur Nietführung dienen. Daraus ergibt sich eine reduzierte Reibkontaktfläche in der Nietführung (Linienkontakt).

Die Vorsprünge 241 bzw. 243 sind regelmäßig über den Umfang ihres Stanzniets verteilt.

Der Stanzniet 203 gemäß Figur 4 ist als Halbhohlniet mit radialen Vorsprüngen 243 wie Figur 3 ausgebildet. Zusätzlich weist er einen abgeflachten Halbrundkopf 25 mit der Wechselwirkungsfläche A auf, die kleiner als die Querschnittsfläche B ist. Die Vorsprünge ragen zweckmäßigerweise in einer Projektion auf eine Ebene senkrecht zu der Längsachse L nicht über den Nietkopf 25 hinaus und/oder fluchten mit dem Nietkopf 25, d.h. schließen mit seinem Umfang ab. Dadurch kann eine stabile Nietführung gewährleistet werden.

Der Stanzniet 204 gemäß Figur 5 ist als Hohlniet mit radialen Vorsprüngen 243 wie Figur 3 ausgebildet. Der Nietkopf ist ein abgeflachter Halbrundkopf mit einer Bohrung O, die durch den gesamten Niet verläuft. Die Wechselwirkungsfläche A hat dementsprechend die Form eines Kreisrings und ist deutlich kleiner als die Querschnittsfläche B.

Es versteht sich, dass die in den Figuren 2 bis 5 gezeigten Merkmale auch in einer beliebigen Kombination einsetzbar sind.

## Patentansprüche

1. Verwendung eines Stanzniets in einer Stanznietvorrichtung (10), wobei der Stanzniet (20; 201; 202; 203; 204) einen Nietkopf (25) und einen sich daran anschließenden Nietschaft (24) mit einem Nietfuß (27) aufweist, wobei der Nietschaft (24) wenigstens einen Vorsprung (241; 243) aufweist, der von einer Oberfläche des Nietschaftes (24) vorspringt, wobei der wenigstens eine Vorsprung (241) von dem Nietfuß (27) in axialer Richtung entlang einer Längsachse (L) des Stanzniets vorspringt und sich in Umfangsrichtung des Stanzniets erstreckt,
wobei die Stanznietvorrichtung (10) ein Setzwerkzeug zum Setzen von Stanznieten (20; 201; 202; 203) in Fügepartner (11, 12) aufweist, wobei das Setzwerkzeug einen Stempel (15) und eine Matrize (18) aufweist,
wobei die Stanznietvorrichtung (10) ein Ultraschallsystem (30) aufweist, um den Stempel (15) in Schwingungen zu versetzen.

2. Verwendung nach Anspruch 1, wobei wenigstens ein weiterer Vorsprung (243) von einer Mantelfläche (244) des Nietschaftes (24) vorspringt.

3. Verwendung nach Anspruch 2, wobei der wenigstens eine weitere Vorsprung (243) von der Mantelfläche (244) in radialer Richtung senkrecht zu einer Längsachse (L) des Stanzniets vorspringt und sich in Längsrichtung des Stanzniets erstreckt.

4. Verwendung nach Anspruch 3, wobei der wenigstens eine weitere Vorsprung (243) in einer Projektion auf eine Ebene senkrecht zu der Längsachse (L) des Stanzniets nicht über den Nietkopf (25) hinausragt und/oder mit dem Nietkopf (25) fluchtet.

5. Verwendung nach einem der vorstehenden Ansprüche, wobei der Stanzniet (20; 201; 202; 203; 204) wenigstens zwei Vorsprünge (241; 243) aufweist, die regelmäßig über den Umfang des Stanzniets verteilt sind.

6. Verwendung nach einem der vorstehenden Ansprüche, wobei der wenigstens eine Vorsprung (241; 243) zwei sich in einem Winkel zueinander erstreckende Flächen aufweist.

7. Verwendung nach einem der vorstehenden Ansprüche, wobei der Stanzniet (20; 201; 202; 203; 204) als Halbhohlniet oder als Hohlniet ausgebildet ist.

8. Verwendung nach einem der vorstehenden Ansprüche, wobei der Nietkopf (25) eine ebene Wechselwirkungsfläche (A) zur Wechselwirkung mit dem Stempel (15) der Stanznietvorrichtung (10) aufweist, wobei die ebene Wechselwirkungsfläche (A) kleiner als eine Querschnittsfläche (B) durch den Nietschaft (24) ist.

## Claims

1. Use of a punch rivet in a punch-riveting device (10), wherein the punch rivet (20; 201; 202; 203; 204) has a rivet head (25) and adjoining thereto a rivet shank (24) having a rivet foot (27), wherein the rivet shank (24) has at least one protrusion (241; 243) which protrudes from a surface of the rivet shank (24), wherein the at least one protrusion (241) protrudes from the rivet foot (27) in an axial direction along a longitudinal axis (L) of the punch rivet and extends in a circumferential direction of the punch rivet,
wherein the punch-riveting device (10) has a setting tool for setting punch rivets (20; 201; 202; 203) in joining partners (11, 12), wherein the setting tool has a punch (15) and a die (18);
wherein the punch-riveting device (10) has an ultrasonic system (30) in order for the punch (15) to be oscillated.

2. Use according to Claim 1, wherein at least one further protrusion (243) protrudes from a shell face (244) of the rivet shank (24).

3. Use according to Claim 2, wherein the at least one further protrusion (243) protrudes from the shell face (244) in a radial direction that is perpendicular to a longitudinal axis (L) of the punch rivet and extends in the longitudinal direction of the punch rivet.

4. Use according to Claim 3, wherein the at least one further protrusion (243), when viewed in a projection onto a plane that is perpendicular to the longitudinal axis (L) of the punch rivet, does not project beyond the rivet head (25) and/or is flush with the rivet head (25).

5. Use according to one of the preceding claims, wherein the punch rivet (20; 201; 202; 203; 204) has at least two protrusions (241; 243) which are distributed regularly across the circumference of the punch rivet.

6. Use according to one of the preceding claims, wherein the at least one protrusion (241; 243) has two faces that extend at a mutual angle.

7. Use according to one of the preceding claims, wherein the punch rivet (20; 201; 202; 203; 204) is configured as a semi-tubular rivet or as a tubular rivet.

8. Use according to one of the preceding claims, wherein the rivet head (25) has a planar interaction face (A) for interacting with the punch (15) of the punch-riveting device (10), wherein the planar interaction face (A) is smaller than a cross-sectional face (B) through the rivet shank (24).

## Revendications

1. Utilisation d'un rivet auto-poinçonnant dans un dispositif de rivetage auto-poinçonnant (10), dans lequel le rivet auto-poinçonnant (20; 201; 202; 203; 204) présente une tête de rivet (25) et une tige de rivet s'y raccordant (24) avec un pied de rivet (27), dans lequel la tige de rivet (24) présente au moins une protubérance (241; 243), qui est saillante à partir d'une surface de la tige de rivet (24), dans laquelle ladite au moins une protubérance (241) est saillante à partir du pied de rivet (27) en direction axiale le long d'un axe longitudinal (L) du rivet auto-poinçonnant et s'étend dans la direction périphérique du rivet auto-poinçonnant, dans laquelle le dispositif de rivetage auto-poinçonnant (10) présente un outil de pose pour la pose de rivets auto-poinçonnants (20; 201; 202; 203) dans des éléments à joindre (11, 12), dans lequel l'outil de pose présente un poinçon (15) et une matrice (18),
dans laquelle le dispositif de rivetage auto-poinçonnant (10) présente un système à ultrasons (30), permettant de mettre le poinçon (15) en vibration.

2. Utilisation selon la revendication 1, dans laquelle au moins une autre protubérance (243) est saillante à partir d'une surface latérale (244) de la tige de rivet (24).

3. Utilisation selon la revendication 2, dans laquelle ladite au moins une autre protubérance (243) est saillante à partir de la surface latérale (244) en direction radiale perpendiculairement à un axe longitudinal (L) du rivet auto-poinçonnant et s'étend dans la direction longitudinale du rivet auto-poinçonnant.

4. Utilisation selon la revendication 3, dans laquelle ladite au moins une autre protubérance (243), dans une projection sur un plan perpendiculaire à l'axe longitudinal (L) du rivet auto-poinçonnant, ne se prolonge pas au-delà de la tête de rivet (25) et/ou se termine à fleur de la tête de rivet (25).

5. Utilisation selon l'une quelconque des revendications précédentes, dans laquelle le rivet auto-poinçonnant (20; 201; 202; 203; 204) présente au moins deux protubérances (241; 243), qui sont réparties uniformément sur la périphérie du rivet auto-poinçonnant.

6. Utilisation selon l'une quelconque des revendications précédentes, dans laquelle ladite au moins une protubérance (241; 243) présente deux faces s'étendant sous un angle l'une par rapport à l'autre.

7. Utilisation selon l'une quelconque des revendications précédentes, dans laquelle le rivet auto-poinçonnant (20; 201; 202; 203; 204) est un rivet à moitié creux ou un rivet creux.

8. Utilisation selon l'une quelconque des revendications précédentes, dans laquelle la tête de rivet (25) présente une face d'interaction plane (A) pour l'interaction avec le poinçon (15) du dispositif de rivetage auto-poinçonnant (10), dans laquelle la face d'interaction plane (A) est plus petite qu'une face de section transversale (B) à travers la tige de rivet (24).
